# FASCICULE DE BREVET EUROPEEN

(11) **EP 3 074 223 B1**
(45) Date de publication et mention de la délivrance du brevet: **24.12.2025**
(21) Numéro de dépôt: 14821742.5
(22) Date de dépôt: 25.11.2014
(51) Int. Cl.: B32B 17/10, G10K 11/168

(54) **VITRAGE COMPRENANT UN INTERCALAIRE PLASTIQUE VISCOELASTIQUE POUR UN AMORTISSEMENT VIBRO-ACOUSTIQUE**
VERGLASUNG MIT EINER THERMOPLASTISCHEN VISKOELASTISCHEN ZWISCHENSCHICHT ZUR SCHWINGUNGS-AKUSTISCHEN DÄMPFUNG
GLAZING COMPRISING A THERMOPLASTIC VISCOELASTIC INTERLAYER FOR VIBRO-ACOUSTIC ATTENUATION

(30) Priorité: 27.11.2013 FR 1361724
(43) Date de publication de la demande: 05.10.2016
(73) Titulaire: Saint-Gobain Sekurit France, 60150 Thourotte (FR)
(72) Inventeur: PAYEN, Corinne, F-60150 Montmacq (FR); FOURNIER, David, F-60120 Bonneuil les eaux (FR)
(74) Mandataire: Saint-Gobain Recherche
(86) Numéro de dépôt international: PCT/FR2014/053027
(87) Numéro de publication internationale: WO 2015/079159

(56) Documents cités:
- EP-A1- 1 800 855
- EP-A1- 1 958 764
- EP-A1- 2 153 989
- EP-A1- 2 732 968
- US-A1- 2007 009 714
- US-A1- 2009 294 212
- US-A1- 2012 094 084

## Description

L'invention concerne un intercalaire plastique viscoélastique destiné à être incorporé entre deux feuilles de verre pour former un vitrage feuilleté ayant des propriétés d'amortissement vibro-acoustiques, destiné notamment à des engins de locomotion, en particulier un véhicule automobile.

Parmi toutes les qualités concourant au confort dans les moyens de transport modernes comme les trains et les automobiles, le silence est devenu déterminant.

Le confort acoustique a été amélioré depuis plusieurs années maintenant, en traitant les bruits, tels que les bruits du moteur, de roulement ou de suspension, et cela à leur origine ou au cours de leur propagation aérienne ou dans les solides, au moyen par exemple de revêtements absorbants, de pièce de liaison en élastomère.

Les formes des véhicules ont été également modifiées pour améliorer la pénétration dans l'air et diminuer les turbulences qui sont elles-mêmes sources de bruit.

Et depuis quelques années, on s'est penché sur le rôle que pouvaient jouer les vitrages dans l'amélioration du confort acoustique, en particulier des vitrages feuilletés comportant des films intercalaires plastiques. Les vitrages feuilletés présentent en outre d'autres avantages tels que supprimer le risque de projection de fragments en cas de casse brutale, constituer un retardateur d'effraction.

Il a été mis en évidence que l'utilisation de films plastiques standards dans des vitrages feuilletés ne convenait pas dans l'amélioration du confort acoustique. Il a alors été développé des films plastiques spécifiques qui présentaient des propriétés d'amortissement permettant une amélioration du confort acoustique.

Par ailleurs, dans les pare-brise existants, l'épaisseur de la feuille de verre destinée à être tournée vers l'extérieur du véhicule est en général de 2,1 mm et l'épaisseur de la feuille de verre destinée à être tournée vers l'intérieur du véhicule est en général de 1,6 mm. Toutefois, la tendance est à l'allègement des véhicules automobiles afin de diminuer leur consommation et le rejet de CO₂ induit. Un moyen est de proposer des vitrages automobiles plus légers. Une solution pour diminuer le poids des vitrages est de diminuer l'épaisseur des feuilles de verre. Toutefois, cette diminution d'épaisseur entraîne une dégradation des propriétés acoustiques du vitrage feuilleté. US 2012/094084 A1 décrit un intercalaire destiné à être incorporé dans un vitrage feuilleté qui permet d'obtenir un vitrage plus mince et plus économique qui possède également les propriétés de durabilité et d'insonorisation associées aux vitrages plus épais et plus lourds.

Par ailleurs, il est également important de respecter l'intimité des personnes à l'intérieur d'un véhicule ou encore de protéger le conducteur d'un véhicule contre l'éblouissement à la lumière du soleil ou simplement pour un effet esthétique.

Il y a donc un besoin pour un intercalaire plastique viscoélastique destiné à être incorporé entre deux feuilles de verre pour former un vitrage feuilleté ayant des propriétés d'amortissement vibro-acoustiques, qui permette une diminution de l'épaisseur des feuilles de verre sans dégradation des propriétés d'amortissement vibro-acoustiques, tout en assurant un respect de l'intimité des personnes à l'intérieur d'un véhicule ou encore une protection du conducteur d'un véhicule contre l'éblouissement à la lumière du soleil ou simplement pour un effet esthétique.

Pour cela, l'invention propose un vitrage comme décrit dans la revendication 1. Les revendications dépendantes 2 à 6 décrivent des modes de réalisation préférés.

L'invention concerne également un véhicule automobile comprenant un vitrage décrit ci-dessus, la feuille de verre d'épaisseur comprise entre 0,5 mm et 2,6 mm étant tournée vers l'extérieur du véhicule et la feuille de verre d'épaisseur comprise entre 0,5 mm et 1,6 mm étant tournée vers l'intérieur du véhicule.

L'invention concerne également une utilisation du vitrage décrit plus haut comme pare-brise de véhicule automobile.

Selon une autre particularité, le vitrage est utilisé comme vitre latérale avant, vitre latérale arrière, lunette arrière ou vitre de custode de véhicule automobile.

D'autres caractéristiques et avantages de l'invention vont à présent être décrits en regard des dessins sur lesquels :
- La figure 1 représente une courbe de l'isolement acoustique en fonction de la fréquence, mesuré sur trois pare-brise ;
- La figure 2 représente une vue en coupe d'un vitrage selon l'invention.

L'invention se rapporte à un intercalaire plastique viscoélastique destiné à être incorporé entre deux feuilles de verre pour former un vitrage feuilleté ayant des propriétés d'amortissement vibro-acoustiques. L'intercalaire comprend au moins une couche en matériau plastique viscoélastique avec des propriétés d'amortissement vibro-acoustique.

L'intercalaire est tel que la fréquence de résonance f₂ du deuxième mode de résonance d'un barreau de vitrage feuilleté de surface 25 mm x 300 mm composé de deux feuilles de verre d'épaisseur 2,1 mm chacune entre lesquelles est incorporé l'intercalaire, déterminée par un mesurage de l'impédance mécanique (MIM) à 20°C selon la norme ISO 16940 (avec une seule différence concernant l'épaisseur des feuilles de verre du barreau qui est de 2,1 mm au lieu de 4 mm), est comprise entre 760 Hz et 1000 Hz et le facteur de perte η₂ du deuxième mode de résonance du même barreau, déterminé par MIM dans les mêmes conditions, est supérieur ou égal à 0,25.

De plus, l'intercalaire est teinté dans la masse au moins sur une partie de sa surface, ce qui permet, en cas de teinte sur toute la surface, de respecter l'intimité des personnes à l'intérieur d'un véhicule ou simplement pour un effet esthétique, ou encore, en cas de teinte en partie supérieure d'un pare-brise, de protéger le conducteur d'un véhicule contre l'éblouissement à la lumière du soleil.

Les inventeurs ont mis en évidence, comme on le verra plus loin, qu'un intercalaire comprenant ces caractéristiques permet d'obtenir un vitrage feuilleté aminci aux performances acoustiques équivalentes, voire supérieures, à celles d'un vitrage feuilleté avec des épaisseurs de verre classiques incorporant un intercalaire à propriétés acoustiques améliorées connu.

L'intercalaire est destiné à être incorporé entre deux feuilles de verre pour former un vitrage feuilleté selon l'invention.

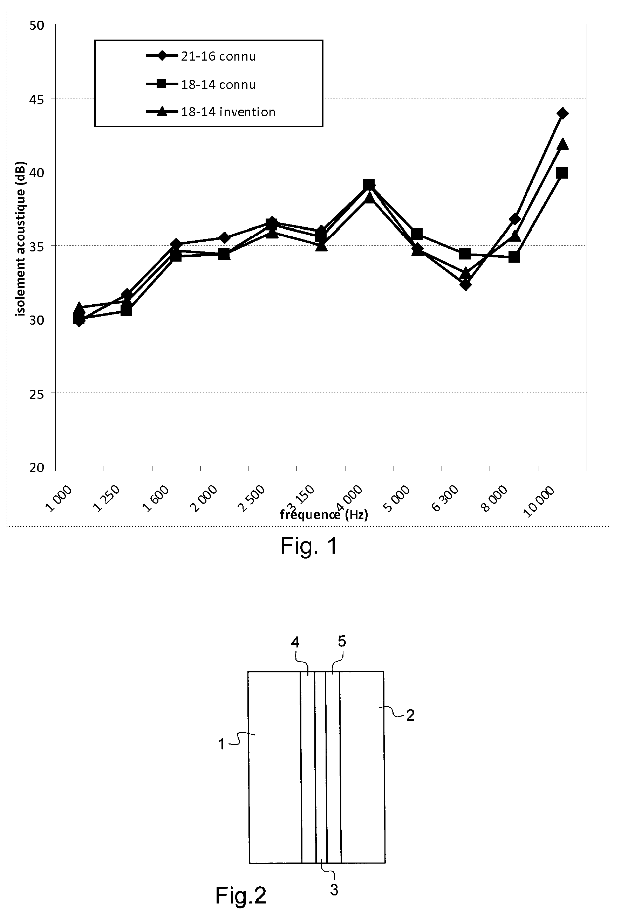

La figure 2 représente une vue en coupe d'un vitrage selon l'invention.

Le vitrage comprend deux feuilles de verre 1, 2 entre lesquelles est inséré l'intercalaire.

La solidarisation de l'intercalaire aux feuilles de verre est réalisée par des moyens connus, par exemple par empilement des feuilles de verre et de l'intercalaire et par passage de l'ensemble en autoclave.

La feuille de verre 1 du vitrage est destinée à être tournée vers l'extérieur du véhicule tandis que la feuille de verre 2 est destinée à être tournée vers l'intérieur du véhicule. La feuille de verre 1 est de préférence plus épaisse que la feuille de verre 2 de façon à ce que le vitrage permette une meilleure protection contre les attaques extérieures (intempéries, projection de gravillons, etc...). En effet, plus le verre est épais, plus il est résistant mécaniquement. Toutefois, plus le verre est épais, plus il est lourd. Il faut donc trouver un compromis entre la résistance mécanique et le poids du vitrage. Ainsi, l'épaisseur de la feuille de verre 1 est par exemple comprise entre 0,5 mm et 2,6 mm, de préférence entre 1,4 et 2,0 mm et l'épaisseur de la feuille de verre 2 est par exemple comprise entre 0,5 mm et 1,6 mm, de préférence entre 1,1 et 1,5 mm.

Dans les vitrages existants, l'épaisseur de la feuille de verre 1 est en général de 2,1 mm et l'épaisseur de la feuille de verre 2 est en général de 1,6 mm, soit une épaisseur totale de verre de 3,7 mm.

Le vitrage selon la présente invention comprend une épaisseur totale de verre strictement inférieure à 3,7 mm, de préférence inférieure ou égale à 3,2 mm.

De préférence, selon l'invention, l'épaisseur de la feuille de verre 1 est de 1,8 mm et l'épaisseur de la feuille de verre 2 est de 1,4 mm afin de limiter le poids du vitrage, ce qui permet de réduire la consommation en carburant d'un véhicule équipé d'un tel vitrage. Cela permet également de manipuler plus facilement le vitrage et d'économiser de la matière.

Le vitrage selon l'invention peut également avoir une feuille de verre 1 d'épaisseur 1,6 mm et une feuille de verre 2 d'épaisseur 1,2 mm, ou une feuille de verre 1 d'épaisseur 1,4 mm et une feuille de verre 2 d'épaisseur 1,1 mm.

L'intercalaire est constitué d'au moins une couche 3 en plastique viscoélastique aux propriétés d'amortissement vibro-acoustique. Elle est à base de polyvinylbutyral et de plastifiant. Le taux et la nature du plastifiant et le degré d'acétalisation du polyvinylbutyral permettent de jouer de façon connue sur la rigidité d'un composant à base de polyvinylbutyral et de plastifiant.

L'intercalaire comprend également deux couches 4, 5, dites couches externes, entre lesquelles est insérée la couche 3.

Les couches externes 4, 5 sont en PVB standard. La couche 3 est moins rigide que les couches externes 4, 5 afin de vibrer correctement pour assurer l'amortissement acoustique souhaité.

En variante, l'intercalaire peut comporter au moins deux couches en plastique viscoélastique aux propriétés d'amortissement vibro-acoustique, entourées ou pas de couches en PVB standard.

Les caractéristiques acoustiques de l'intercalaire sont déterminées par mesurage de l'impédance mécanique (MIM) à 20°C selon la norme ISO 16940 d'un barreau de vitrage feuilleté de surface 25 mm x 300 mm composé de deux feuilles de verre d'épaisseur 2,1 mm (et non de 4 mm comme préconisé dans la norme ISO 16940) chacune entre lesquelles est incorporé un intercalaire selon l'invention, c'est-à-dire un intercalaire comprenant au moins une couche en plastique viscoélastique aux propriétés d'amortissement vibro-acoustique.

Le MIM permet de déterminer des fréquences de résonance et des facteurs de perte des différents modes de résonance du barreau de vitrage feuilleté.

Le vitrage est selon l'invention si l'intercalaire est tel que la fréquence de résonance f₂ du deuxième mode de résonance du barreau de vitrage feuilleté déterminé par MIM est comprise entre 760 Hz et 1000 Hz et le facteur de perte η₂ du deuxième mode de résonance du barreau de vitrage feuilleté déterminé par MIM est supérieur ou égal à 0,25.

De préférence, la fréquence de résonance f₂ est comprise entre 800 Hz et 900 Hz, ce qui permet d'avoir des performances acoustiques améliorées en dégradant moins le niveau d'affaiblissement du vitrage feuilleté avant la fréquence critique. De façon encore préférée, la fréquence de résonance f₂ est comprise entre 800 Hz et 850 Hz, ce qui permet d'avoir des performances acoustiques encore améliorées en dégradant encore moins le niveau d'affaiblissement du vitrage feuilleté avant la fréquence critique.

De préférence, le facteur de perte η₂ est supérieur à 0,30, ce qui permet d'avoir des performances acoustiques améliorées en améliorant l'amortissement acoustique.

Le mesurage de l'impédance mécanique (MIM) est réalisé de préférence au moins 1 mois après assemblage du barreau de vitrage feuilleté, le barreau de vitrage feuilleté ayant lui-même été assemblé au moins 1 mois après la fabrication de l'intercalaire. Cela permet d'être sûr que l'intercalaire et le vitrage feuilleté ont atteint des états stables et donc de déterminer des valeurs fiables.

La figure 1 représente une courbe de l'isolement acoustique en fonction de la fréquence, mesuré sur trois pare-brise. L'isolement acoustique d'un vitrage rend compte des performances acoustiques qui pourront être constatées sur un véhicule équipé dudit vitrage.

Ainsi, un premier pare-brise (21-16 connu) comprend :
- deux feuilles de verre d'épaisseurs respectives 2,1 mm et 1,6 mm, et
- un intercalaire comprenant deux couches externes en PVB standard et une couche centrale en plastique viscoélastique aux propriétés d'amortissement vibro-acoustique, l'intercalaire ayant une fréquence de résonance f₂ de 675 Hz (± 15 Hz) et un facteur de perte η₂ égal à 0,35 (± 0,03).

Le premier pare-brise correspond à un pare-brise classique avec un intercalaire aux propriétés d'amortissement acoustique connu.

La courbe d'isolement acoustique (représentée par des losanges) du premier pare-brise montre un creux vers 6500 Hz.

Un deuxième pare-brise (18-14 connu) comprend :
- deux feuilles de verre d'épaisseurs respectives 1,8 mm et 1,4 mm, et
- un intercalaire comprenant deux couches externes en PVB standard et une couche centrale en plastique viscoélastique aux propriétés d'amortissement vibro-acoustique, l'intercalaire ayant une fréquence de résonance f₂ de 675 Hz (± 15 Hz) et un facteur de perte η₂ égal à 0,35 (± 0,03).

Le deuxième pare-brise correspond à un pare-brise aminci avec un intercalaire identique à celui du premier pare-brise.

La courbe d'isolement acoustique (représentée par des carrés) du deuxième pare-brise montre un comportement similaire à celle du premier pare-brise jusque vers 5000 Hz, mais un creux décalé vers les hautes fréquences, vers 8000 Hz. Ce décalage du creux est très gênant car cela implique que ce pare-brise laisse passer des bruits aériens à des fréquences aigües qui sont gênantes pour l'oreille humaine.

Un troisième pare-brise (18-14 invention) comprend :
- deux feuilles de verre d'épaisseurs respectives 1,8 mm et 1,4 mm, et
- un intercalaire comprenant deux couches externes en PVB standard et une couche centrale en plastique viscoélastique aux propriétés d'amortissement vibro-acoustique, l'intercalaire ayant une fréquence de résonance f₂ de 800 Hz (± 15 Hz) et un facteur de perte η₂ égal à 0,30 (± 0,03).

Le troisième pare-brise correspond à un pare-brise aminci avec un intercalaire pour former un vitrage selon l'invention.

La courbe d'isolement acoustique (représentée par des triangles) du troisième pare-brise montre un comportement similaire à celle du premier pare-brise, avec un creux recentré vers 6500 Hz et des valeurs d'isolement acoustique similaires à celles du premier pare-brise.

Le pare-brise avec un intercalaire pour former un vitrage selon l'invention permet donc bien de compenser la dégradation acoustique liée à l'amincissement du vitrage.

Le vitrage feuilleté selon l'invention peut être utilisé comme pare-brise de véhicule automobile. Dans ce cas-là, il satisfait bien entendu à toutes les conditions du règlement No. 43 des Nations Unies (dit règlement R43) de résistance aux chocs durs pour assurer sa résistance mécanique. Pour ce faire, dans le cas d'un intercalaire comprenant deux couches externes en PVB standard, l'épaisseur de ces couches externes 4, 5 est par exemple adaptée de façon connue, par exemple par la demande de brevet FR 09 52567.

Par ailleurs, l'intercalaire est teinté dans la masse au moins sur une partie de sa surface. Lorsqu'il est teinté uniquement en partie supérieure d'un pare-brise, il permet de protéger le conducteur d'un véhicule contre l'éblouissement à la lumière du soleil. Lorsqu'il est teinté sur toute sa surface, il peut permettre le respect de l'intimité des personnes à l'intérieur d'un véhicule. Lorsque la teinte est faible, il a simplement un effet esthétique. En cas de transmission lumineuse trop faible par rapport aux normes existantes pour le pare-brise ou les vitres latérales avant, il peut être utilisé dans une vitre latérale arrière, dans une lunette arrière ou dans une vitre de custode de véhicule automobile.

## Revendications

1. Vitrage comprenant :
- une feuille de verre (1) d'épaisseur comprise entre 0,5 mm et 2,6 mm,
- une feuille de verre (2) d'épaisseur comprise entre 0,5 mm et 1,6 mm, un intercalaire, l'intercalaire étant entre les feuilles de verre (1, 2),
l'épaisseur totale des feuilles de verre (1, 2) est strictement inférieure à 3,7 mm, l'intercalaire étant un intercalaire plastique viscoélastique destiné à être incorporé entre les deux feuilles de verre pour former un vitrage feuilleté ayant des propriétés d'amortissement vibro-acoustiques, l'intercalaire comprenant au moins une couche (3) en matériau plastique viscoélastique aux propriétés d'amortissement vibro-acoustique et deux couches externes (4, 5) en PVB standard, la couche (3) étant entre les deux couches externes (4, 5), la couche (3) étant à base de polyvinylbutyral et de plastifiant, et
l'intercalaire étant teinté dans la masse au moins sur une partie de sa surface, l'intercalaire étant tel que la fréquence de résonance f₂ du deuxième mode de résonance d'un barreau de vitrage feuilleté de surface 25 mm x 300 mm composé de deux feuilles de verre d'épaisseur 2,1 mm chacune entre lesquelles est incorporé l'intercalaire, déterminée par un mesurage de l'impédance mécanique (MIM) à 20°C selon la norme ISO 16940, est comprise entre 760 Hz et 1000 Hz et le facteur de perte η₂ du deuxième mode de résonance du même barreau, déterminé par MIM dans les mêmes conditions, est supérieur ou égal à 0,25.

2. Vitrage selon la revendication 1, dans lequel la fréquence de résonance f₂ est comprise entre 800 et 900 Hz, de préférence entre 800 Hz et 850 Hz.

3. Vitrage selon la revendication 1 ou 2, dans lequel le facteur de perte η₂ est supérieur à 0,30.

4. Vitrage selon l'une des revendications 1 à 3, dans lequel le mesurage de l'impédance mécanique est réalisé au moins 1 mois après assemblage du barreau de vitrage feuilleté, le barreau de vitrage feuilleté ayant lui-même été assemblé au moins 1 mois après la fabrication de l'intercalaire.

5. Vitrage selon l'une des revendications 1 à 4, dans lequel l'intercalaire est teinté dans sa partie supérieure seulement.

6. Vitrage selon l'une des revendications 1 à 5, dans lequel l'intercalaire est teinté sur toute sa surface.

7. Véhicule automobile comprenant un vitrage selon l'une des revendications 1 à 6, la feuille de verre (1) d'épaisseur comprise entre 0,5 mm et 2,6 mm étant tournée vers l'extérieur du véhicule et la feuille de verre (2) d'épaisseur comprise entre 0,5 mm et 1,6 mm étant tournée vers l'intérieur du véhicule.

8. Utilisation du vitrage selon l'une des revendications 1 à 6 comme pare-brise de véhicule automobile.

9. Utilisation du vitrage selon l'une des revendications 1 à 6 comme pare-brise, vitre latérale avant, vitre latérale arrière, lunette arrière ou vitre de custode de véhicule automobile.

## Patentansprüche

1. Verglasung, umfassend:
- eine Glasscheibe (1) mit einer Dicke zwischen 0,5 mm und 2,6 mm,
- eine Glasscheibe (2) mit einer Dicke zwischen 0,5 mm und 1,6 mm,
eine Zwischenlage, wobei die Zwischenlage sich zwischen den Glasscheiben (1, 2) befindet, wobei die Gesamtdicke der Glasscheiben (1, 2) strikt weniger als 3,7 mm beträgt, wobei es sich bei der Zwischenlage um eine viskoelastische Kunststoffzwischenlage handelt, die zwischen den beiden Glasscheiben zur Bildung einer Verbundverglasung mit vibroakustischen Dämpfungseigenschaften integriert werden soll, wobei die Zwischenlage mindestens eine Schicht (3) aus viskoelastischem Kunststoffmaterial mit vibroakustischen Dämpfungseigenschaften und zwei Außenschichten (4, 5) aus Standard-PVB umfasst, wobei sich die Schicht (3) zwischen den beiden Außenschichten (4, 5) befindet und die Schicht (3) auf Polyvinylbutyral und einem Weichmacher basiert, und
die Zwischenlage mindestens auf einem Teil ihrer Oberfläche durchgefärbt ist, wobei die Zwischenlage so beschaffen ist, dass die Resonanzfrequenz f₂ der zweiten Resonanzmode eines Verbundverglasungsstabes mit einer Oberfläche von 25 mm × 300 mm, bestehend aus zwei 2,1 mm dicken Glasscheiben mit einer dazwischenliegenden Zwischenlage, bestimmt durch eine mechanische Impedanzmessung (MIM) bei 20 °C gemäß der Norm ISO 16940, zwischen 760 Hz und 1000 Hz liegt, und der Verlustfaktor η₂ der zweiten Resonanzmode desselben Stabes, der mittels MIM unter denselben Bedingungen bestimmt wurde, größer oder gleich 0,25 ist.

2. Verglasung nach Anspruch 1, wobei die Resonanzfrequenz f₂ zwischen 800 und 900 Hz, vorzugsweise zwischen 800 Hz und 850 Hz, liegt.

3. Verglasung nach Anspruch 1 oder 2, wobei der Verlustfaktor η₂ größer als 0,30 ist.

4. Verglasung nach einem der Ansprüche 1 bis 3, wobei die Messung der mechanischen Impedanz mindestens 1 Monat nach einem Zusammenbau des Verbundverglasungsstabes durchgeführt wird, wobei der Verbundverglasungsstab selbst mindestens 1 Monat nach der Herstellung der Zwischenlage zusammengebaut wurde.

5. Verglasung nach einem der Ansprüche 1 bis 4, wobei die Zwischenlage nur in ihrem oberen Teil gefärbt ist.

6. Verglasung nach einem der Ansprüche 1 bis 5, wobei die Zwischenlage über ihre gesamte Oberfläche gefärbt ist.

7. Kraftfahrzeug, umfassend eine Verglasung nach einem der Ansprüche 1 bis 6, wobei die Glasscheibe (1) mit einer Dicke zwischen 0,5 mm und 2,6 mm der Außenseite des Fahrzeugs zugewandt ist und die Glasscheibe (2) mit einer Dicke zwischen 0,5 mm und 1,6 mm dem Inneren des Fahrzeugs zugewandt ist.

8. Verwendung der Verglasung nach einem der Ansprüche 1 bis 6 als Windschutzscheibe eines Kraftfahrzeugs.

9. Verwendung der Verglasung nach einem der Ansprüche 1 bis 6 als Windschutzscheibe, vordere Seitenscheibe, hintere Seitenscheibe, Heckscheibe oder Dreiecksscheibe eines Kraftfahrzeugs.

## Claims

1. Glazing comprising:
- a glass sheet (1) between 0.5 mm and 2.6 mm thick,
- a glass sheet (2) between 0.5 mm and 1.6 mm thick,
- an interlayer, the interlayer being between the glass sheets (1, 2),
in which the total thickness of the glass sheets (1, 2) is strictly less than 3.7 mm,
the interlayer being a viscoelastic plastic interlayer intended to be incorporated between two glass sheets to form a laminated glazing with vibro-acoustic damping properties, the interlayer comprising at least one layer (3) made of viscoelastic plastic with vibro-acoustic damping properties and two outer layers (4, 5) made of standard PVB, the layer (3) being between the two outer layers (4, 5), the layer (3) being based on polyvinyl butyral and plasticizer, and the interlayer being tinted in the bulk at least on a part of its surface, the interlayer being such that the resonant frequency f₂ of the second resonance mode of a laminated glazing bar with a surface area of 25 mm × 300 mm composed of two glass sheets each 2.1 mm thick, between which is incorporated the interlayer, determined by measuring the mechanical impedance (MIM) at 20°C according to standard ISO 16940, is between 760 Hz and 1000 Hz and the loss factor η₂ of the second resonance mode of the same bar, determined by MIM under the same conditions, is greater than or equal to 0.25.

2. Glazing according to Claim 1, in which the resonant frequency f₂ is between 800 and 900 Hz and preferably between 800 Hz and 850 Hz.

3. Glazing according to Claim 1 or 2, in which the loss factor n₂ is greater than 0.30.

4. Glazing according to one of Claims 1 to 3, in which the measurement of the mechanical impedance is performed at least one month after assembly of the laminated glazing bar, the laminated glazing bar having itself been assembled at least one month after the manufacture of the interlayer.

5. Glazing according to one of Claims 1 to 4, in which the interlayer is tinted only in its upper part.

6. Glazing according to one of Claims 1 to 5, in which the interlayer is tinted over its entire surface.

7. Motor vehicle comprising glazing according to one of Claims 1 to 6, the glass sheet (1) between 0.5 mm and 2.6 mm thick being turned facing the exterior of the vehicle and the glass sheet (2) between 0.5 mm and 1.6 mm thick being turned facing the interior of the vehicle.

8. Use of the glazing according to one of Claims 1 to 6 as a motor vehicle windscreen.

9. Use of the glazing according to one of Claims 1 to 6 as a windscreen, a front side window, a rear side window, a rear window or a quarter glass of a motor vehicle.
